# EUROPEAN PATENT APPLICATION

(11) **EP 4 668 631 A1**
(43) Date of publication of application: **24.12.2025**
(21) Application number: 23921652.6
(22) Date of filing: 13.02.2023
(51) Int. Cl.: H04L 1/1812

(54) **METHOD AND APPARATUS FOR HYBRID AUTOMATIC REPEAT REQUEST (HARQ) PROCESS ENABLING CONFIGURATION**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2023/075712
(87) International publication number: WO 2024/168479

(57) **Abstract**

Disclosed in embodiments of the present application are a method and apparatus for the hybrid automatic repeat request (HARQ) process enabling configuration. By means of sending first information to a network device, where the first information is used by the network device to determine capability information of a terminal device, and the capability information is used for indicating a HARQ de-enabling configuration mode supported by the terminal device, second information sent by the network device is received. The second information is used for determining the HARQ process enabling configuration of the terminal device so that the network device, on the basis of the capability information reported by the terminal device, can flexibly configure the HARQ process enabling of the terminal device, thereby ensuring the efficiency of the whole communication system and the reliability of data transmission.

## Description

### TECHNICAL FIELD

The present disclosure relates to the field of communication technology, and specifically to a method and apparatus for configuring hybrid automatic repeat request (HARQ) process enabling.

### BACKGROUND

In the scenario of satellite communication, due to the long distance of signal transmission and the long duration of data transmission, there is a significant transmission delay in the satellite communication system. For some Internet of Things (IoT) devices, there may be a problem of hybrid automatic repeat request (HARQ) stalling, which reduces the transmission rate of the terminals.

In related technologies, in order to avoid the problem of HARQ stalling in Non-terrestrial Network (NTN) scenarios, which may lead to a decrease in system performance, the HARQ disabling operation is introduced. That is to say, for a certain HARQ process, if HARQ is configured with disabling, the terminal will not provide feedback on HARQ information for the downlink transmission of that HARQ process.

### SUMMARY

Embodiments of a first aspect of the present disclosure provide a method for configuring hybrid automatic repeat request process enabling. The method is performed by a terminal, and includes:
sending first information to a network device, wherein the first information is configured for the network device to determine capability information of the terminal, and the capability information is configured to indicate a HARQ disabling configuration mode supported by the terminal;
receiving second information sent by the network device, wherein the second information is configured to determine an enabling configuration of a HARQ process of the terminal.

Embodiments of a second aspect of the present disclosure provide a method for configuring hybrid automatic repeat request process enabling. The method is performed by a network device, and includes:
receiving first information sent by a terminal, wherein the first information is configured for the network device to determine capability information of the terminal, and the capability information is configured to indicate a HARQ disabling configuration mode supported by the terminal;
sending second information to the terminal, wherein the second information is configured to determine an enabling configuration of a HARQ process of the terminal.

Embodiments of a third aspect of the present disclosure provide an apparatus for configuring hybrid automatic repeat request process enabling. The apparatus includes:
a transceiver unit, configured to send first information to a network device, wherein the first information is configured for the network device to determine capability information of the terminal, and the capability information is configured to indicate a HARQ disabling configuration mode supported by the terminal;
wherein the transceiver unit is further configured to receive second information sent by the network device, wherein the second information is configured to determine an enabling configuration of a HARQ process of the terminal.

Embodiments of a fourth aspect of the present disclosure provide an apparatus for configuring hybrid automatic repeat request process enabling. The apparatus includes:
a transceiver unit, configured to receive first information sent by a terminal, wherein the first information is configured for the network device to determine capability information of the terminal, and the capability information is configured to indicate a HARQ disabling configuration mode supported by the terminal;
wherein the transceiver unit is further configured to send second information to the terminal, wherein the second information is configured to determine an enabling configuration of a HARQ process of the terminal.

Embodiments of a fifth aspect of the present disclosure provide a communication device. The communication device includes a processor and a memory for storing a computer program. When the computer program stored in the memory is executed by the processor, the device is caused to implement the method for configuring hybrid automatic repeat request process enabling described in the embodiments of the first aspect.

Embodiments of a sixth aspect of the present disclosure provide a communication device. The communication device includes a processor and a memory for storing a computer program. When the computer program stored in the memory is executed by the processor, the device is caused to implement the method for configuring hybrid automatic repeat request process enabling described in the embodiments of the second aspect.

Embodiments of a seventh aspect of the present disclosure provide a communication device. The communication device includes a processor and an interface circuit, in which the interface circuit is configured to receive code instructions and transmit the code instructions to the processor; and the processor is configured to run the code instructions to cause the device to implement the method for configuring hybrid automatic repeat request process enabling described in the embodiments of the first aspect.

Embodiments of an eighth aspect of the present disclosure provide a communication device. The communication device includes a processor and an interface circuit, in which the interface circuit is configured to receive code instructions and transmit the code instructions to the processor; and the processor is configured to run the code instructions to cause the device to implement the method for configuring hybrid automatic repeat request process enabling described in the embodiments of the second aspect.

Embodiments of a ninth aspect of the present disclosure provide a computer-readable storage medium for storing instructions. When the instructions are executed, the method for configuring hybrid automatic repeat request process enabling described in the embodiments of the first aspect is implemented.

Embodiments of a tenth aspect of the present disclosure provide a computer-readable storage medium for storing instructions. When the instructions are executed, the method for configuring hybrid automatic repeat request process enabling described in the embodiments of the second aspect is implemented.

Embodiments of an eleventh aspect of the present disclosure provide a computer program. When the computer program is running on a computer, the computer is caused to implement the method for configuring hybrid automatic repeat request process enabling described in the embodiments of the first aspect.

Embodiments of a twelfth aspect of the present disclosure provide a computer program. When the computer program is running on a computer, the computer is caused to implement the method for configuring hybrid automatic repeat request process enabling described in the embodiments of the second aspect.

Embodiments of the present disclosure provide a method and an apparatus for configuring HARQ process enabling. By sending the first information to the network device, wherein the first information is configured for the network device to determine the capability information of the terminal, and the capability information is configured to indicate the HARQ disabling configuration mode supported by the terminal; and receiving the second information sent by the network device, which is configured to determine the enabling configuration of the HARQ process of the terminal, the network device can flexibly configure the HARQ process enabling of the terminal based on the capability information reported by the terminal, thereby ensuring the efficiency of the entire communication system and the reliability of data transmission.

The additional aspects and advantages of this disclosure will be partially presented in the following description, some of which will become apparent from the following description, or learned through practice of this disclosure.

### BRIEF DESCRIPTION OF THE DRAWINGS

In order to more clearly illustrate the technical solutions in the embodiments of the present disclosure or background technology, the accompanying drawings required for use in the embodiments of the present disclosure or background technology will be described below.
FIG. 1a is a schematic diagram of an architecture of a communication system provided in an embodiment of the present disclosure.
FIG. 1b is a schematic diagram of HARQ stalling provided in an embodiment of the present disclosure.
FIG. 2 is a schematic flowchart of a method for configuring HARQ process enabling provided in an embodiment of the present disclosure.
FIG. 3 is a schematic flowchart of a method for configuring HARQ process enabling provided in an embodiment of the present disclosure.
FIG. 4 is a schematic flowchart of a method for configuring HARQ process enabling provided in an embodiment of the present disclosure.
FIG. 5 is a schematic flowchart of a method for configuring HARQ process enabling provided in an embodiment of the present disclosure.
FIG. 6 is a schematic flowchart of a method for configuring HARQ process enabling provided in an embodiment of the present disclosure.
FIG. 7 is a schematic flowchart of a method for configuring HARQ process enabling provided in an embodiment of the present disclosure.
FIG. 8 is a block diagram of an apparatus for configuring HARQ process enabling provided in an embodiment of the present disclosure.
FIG. 9 is a block diagram of an apparatus for configuring HARQ process enabling provided in an embodiment of the present disclosure.
FIG. 10 is a block diagram of another apparatus for configuring HARQ process enabling provided in an embodiment of the present disclosure.
FIG. 11 is a block diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are solely for the purpose of describing a particular embodiment and are not intended to limit the embodiments of the present disclosure. The terms "a/an" and "the" in a singular form used in embodiments and claims of the present disclosure are also intended to include a plural form, unless the context clearly indicates other meaning. It should also be understood that the term "and/or" used in this article refers to and includes any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and similarly, the second information may be referred to as the first information. Depending on the context, words "if" and "in case that" used here may be interpreted as "when", "while", or "in response to determining...".

The embodiments of the present disclosure are described in detail below. Examples of the embodiments are shown in the accompanying drawings, in which the same or similar reference numbers throughout the present embodiment represent the same or similar elements or elements having the same or similar functions. The embodiments below with reference to the accompanying drawings are exemplary and are intended to explain the present disclosure, but should not be construed as a limitation to the present disclosure.

In order to better understand the method for configuring HARQ process enabling disclosed in the embodiments of the present disclosure, the following first describes the communication system applicable to the embodiments of the present disclosure.

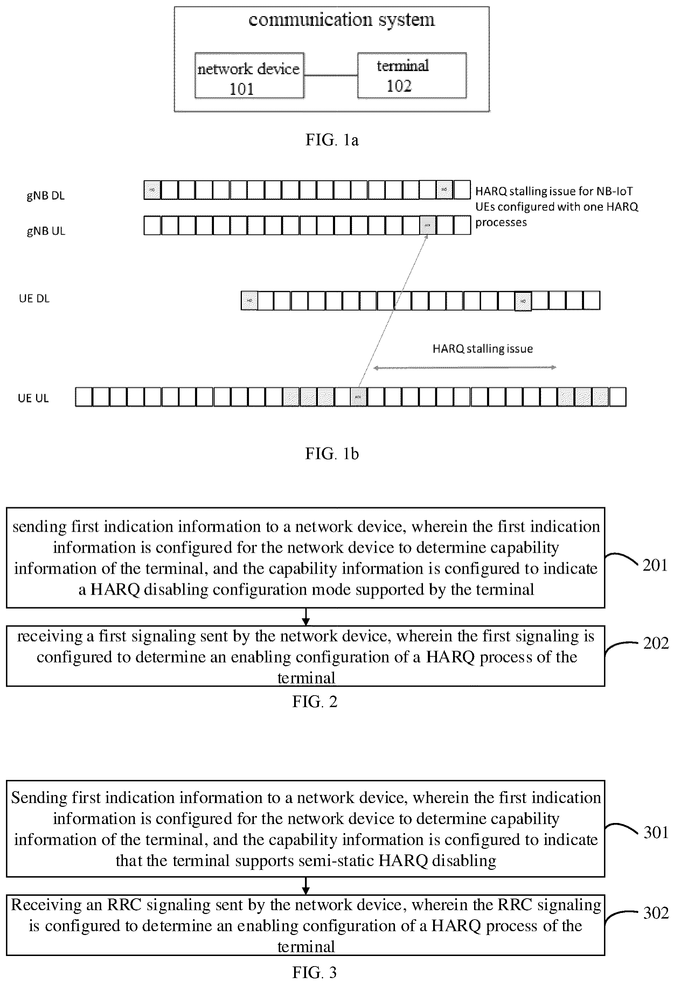

Please refer to FIG. 1a, which is a schematic diagram of an architecture of a communication system provided in an embodiment of the present disclosure. The communication system may include but is not limited to a network device and a terminal. The number and form of devices shown in FIG. 1a are used as an example and do not constitute limitations on the embodiments of the present disclosure. In practical applications, two or more network devices may be included, or two or more terminals may be included. The communication system shown in FIG. 1 includes one network device 101 and one terminal 102, as an example.

It should be noted that the technical solution disclosed in the embodiments of the present disclosure can be applied to various communication systems, for example, Long Term Evolution (LTE) systems, 5th generation (5G) mobile communication systems, 5G new radio (NR) systems, or other future new mobile communication systems.

The network device 101 in embodiments of the present disclosure may be an entity on the network side used for transmitting or receiving signals. For example, the network device 101 can be evolved NodeB (eNB), transmission reception point (TRP), next generation NodeB (gNB) in NR systems, based station in other future mobile communication systems, or access node in wireless fidelity (Wi-Fi) systems. The specific technology and device form adopted by the network device is not limited in the embodiments of the present disclosure. The network device provided in the embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

The terminal 102 in the embodiments of the present disclosure may be an entity on the user side used for receiving or transmitting signals, such as a mobile phone. The terminal can also be referred to as terminal device, user equipment (UE), mobile station (MS), mobile terminal (MT), etc. The terminal can be communication enabled car, smart car, mobile phone, wearable device, tablet, computer with wireless transmission and reception capabilities, virtual reality (VR) terminal, augmented reality (AR) terminal, wireless terminal in industrial control, wireless terminal in autonomous driving, wireless terminal in remote medical surgery, wireless terminal in smart grids, wireless terminal in transportation safety, wireless terminal in smart cities, and wireless terminal in smart home, etc. The specific technology and device form adopted by the terminal is not limited in the embodiments of the present disclosure.

In the scenario of satellite communication, due to the long distance of signal transmission and the long duration of data transmission, there is a significant transmission delay in the satellite communication system. For some Internet of Things (IoT) devices, there may be a problem of hybrid automatic repeat request (HARQ) stalling, which reduces the transmission rate of the terminals, as shown in FIG. 1b. The UE in the figure is configured with a HARQ process.

In related technologies, in order to avoid the problem of HARQ stalling in Non-terrestrial Network (NTN) scenarios, which may lead to a decrease in system performance, the HARQ disabling operation is introduced. That is to say, for a certain HARQ process, if HARQ is configured with disabling, the terminal will not provide feedback on HARQ information for the downlink transmission of that HARQ process.

For IoT terminals, the configuration mode based on semi-static HARQ disabling is currently supported, and it also supports overriding disabling in the semi-static configuration through downlink control information (DCI).

It can be understood that the communication system described in the embodiments of the present disclosure is for a clearer explanation of the technical solution provided in the embodiments of the present disclosure, and does not constitute a limitation on the technical solution provided in the embodiments of the present disclosure. Those skilled in the art know that with the evolution of system architecture and the emergence of new business scenarios, the technical solution provided in the embodiments of the present disclosure is also applicable to similar technical problems.

The following provides a detailed description of the method and apparatus for configuring HARQ process enabling provided in the embodiments of the present disclosure with reference to the accompanying drawings.

Please refer to FIG. 2, which is a schematic flowchart of a method for configuring HARQ process enabling provided in an embodiment of the present disclosure. It should be noted that the method for configuring HARQ process enabling of the present embodiment is performed by a terminal. This method can be executed independently or in combination with any other embodiment of the present disclosure. As shown in FIG. 2, the method may include the following steps.

In step 201, first information is sent to a network device, wherein the first information is configured for the network device to determine capability information of the terminal, and the capability information is configured to indicate a HARQ disabling configuration mode supported by the terminal.

In an embodiment of the present disclosure, the terminal can send the first information to the network device. The first information is configured to indicate the capability information of the HARQ disabling configuration mode supported by the terminal.

In an embodiment of the present disclosure, the capability information of the terminal is any of:
supporting semi-static HARQ disabling;
supporting dynamic HARQ disabling;
supporting semi-static HARQ disabling and dynamic HARQ disabling; or
not supporting HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a medium access control (MAC) layer signaling; or an RRC signaling.

The random access message may be a random access message in the four-step random access, such as Message 1, or a random access message in the two-step random access, such as Message A, etc. The physical layer signaling may be Uplink Control Information (UCI) or other physical layer scheduling signaling.

The first information may be bit information, which is included in the indication field of at least one of the above-mentioned information and can explicitly indicate the capability information of the terminal.

As an example, the first information may be 2-bit information, where "00" can be used to indicate one kind of capability information (such as indicating that the capability information of the terminal is supporting semi-static HARQ disabling, etc.), and "01", "10", "11" can be used to indicate other kinds of capability information of the terminal. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 corresponds to one kind of capability information (for example, the corresponding capability information of the terminal is supporting semi-static HARQ disabling), preamble sequence 2 corresponds to another kind of capability information (for example, the corresponding capability information of the terminal is supporting dynamic HARQ disabling), preamble sequence 3 corresponds to yet another kind of capability information (for example, the corresponding capability information of the terminal is supporting semi-static HARQ disabling and dynamic HARQ disabling), and preamble sequence 4 corresponds to still yet another kind of capability information (for example, the corresponding capability information of the terminal is not supporting HARQ disabling). The preamble sequence in the random access message sent by the terminal to the network device can implicitly indicate the capability information of the terminal corresponding to the preamble sequence.

As another example, the capability information of the terminal can be implicitly indicated by the resource location information of the designated signal sent by the terminal to the network device. For example, the designated signal may be a reference signal sent by the terminal, or a preamble sequence, etc., which is not limited in the embodiments of the present disclosure and can be selected arbitrarily according to the actual situation. It is possible to predefine the correspondence between the resource location information for sending the designated signal and the capability information of the terminal, and implicitly indicate the corresponding capability information through the resource location information.

Similarly, the capability information of the terminal can also be implicitly indicated by the resource location information of the designated control signaling sent by the terminal to the network device. For example, the designated signaling can be uplink control information (UCI), etc., which is not limited in the embodiments of this disclosure and can be selected arbitrarily according to the actual situation. It is possible to predefine the correspondence between the resource location information for sending the designated signaling and the capability information of the terminal, and implicitly indicate the corresponding capability information through the resource location information.

It can be understood that in the embodiments of the present disclosure, the resource location information can be a time-domain location, a frequency-domain location, a time-frequency domain location, and so on, which is not limited in various embodiments of the present disclosure.

In an embodiment of the present disclosure, after the terminal sends the capability information to the network device, the network device can send second information to the terminal based on the capability information. The second information can configure the enabling of the HARQ process of the terminal (for example, enabled or disabled).

In step 202, second information sent by the network device is received, wherein the second information is configured to determine an enabling configuration of a HARQ process of the terminal.

In embodiments of the present disclosure, the terminal can receive the second information sent by the network device and determine the enabling configuration status of the HARQ process based on the second information.

In some implementations, the network device can send the second information to the terminal based on the capability information reported by the terminal. The terminal receives the second information and determines the enabling configuration status of the HARQ process based on the second information (such as enabled or disabled).

As a possible implementation, the terminal supports the semi-static HARQ disabling, and the second information may be carried in the RRC signaling.

As another possible implementation, the terminal supports the dynamic HARQ disabling, and the second information may be carried in the physical layer signaling (such as DCI), or in the RRC signaling and the physical layer signaling.

As yet another possible implementation, the terminal supports the semi-static HARQ disabling and the dynamic HARQ disabling, and the second information may be carried in the RRC signaling and the physical layer signaling.

As still yet another possible implementation, the terminal does not support the HARQ disabling, and the second information can be used to determine the enabling configuration of the HARQ process of the terminal as enabled (that is, the terminal will not be configured with HARQ disabled).

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure the HARQ disabling configuration mode used by the terminal to be dynamic HARQ disabling through the third information, based on the capability information reported by the terminal. The network device can switch the HARQ enabling configuration of the terminal through the physical layer signaling, or switch the HARQ enabling configuration status of the terminal through the RRC signaling and the physical layer signaling.

As yet another possible implementation, the network device can configure the HARQ disabling configuration mode used by the terminal to be semi-static HARQ disabling and dynamic HARQ disabling through the third information, based on the capability information reported by the terminal. The network device can switch the HARQ enabling configuration status of the terminal through the RRC signaling and the physical layer signaling.

As still yet another possible implementation, the network device can configure that the terminal does not use the HARQ disabling through the third information, based on the capability information reported by the terminal.

In summary, by sending the first information to the network device, which is used for the network device to determine the capability information of the terminal, which is used to indicate the hybrid automatic repeat request (HARQ) disabling configuration mode supported by the terminal, and receiving the second information sent by the network device, which is used to determine the enabling configuration of the HARQ process of the terminal, the network device can flexibly configure the HARQ process enabling of the terminal based on the capability information reported by the terminal, thereby ensuring the efficiency of the entire communication system and the reliability of data transmission.

Please refer to FIG. 3, which is a schematic flowchart of a method for configuring HARQ process enabling provided in an embodiment of the present disclosure. It should be noted that the method for configuring HARQ process enabling of the present embodiment is performed by a terminal. This method can be executed independently or in combination with any other embodiment of the present disclosure. As shown in FIG. 3, the method may include the following steps.

In step 301, first information is sent to a network device, wherein the first information is configured for the network device to determine capability information of the terminal, and the capability information is configured to indicate that the terminal supports semi-static HARQ disabling.

In an embodiment of the present disclosure, the terminal can send the first information to the network device. The first information is configured to indicate the capability information of the HARQ disabling configuration mode supported by the terminal, and the capability information of the terminal is supporting semi-static HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a MAC layer signaling; or an RRC signaling.

The random access message may be a random access message in the four-step random access, such as Msgl (Message 1), or a random access message in the two-step random access, such as MsgA (Message A), etc. The physical layer signaling may be Uplink Control Information (UCI) or other physical layer scheduling signaling.

The first information may be bit information, which is included in the indication field of at least one of the above-mentioned information and can explicitly indicate the capability information of the terminal.

As an example, the first information may be 2-bit information, and for example, the value "00" of the first information can indicate that the capability information of the terminal is supporting semi-static HARQ disabling, etc. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 is used to indicate that the capability information of the terminal is supporting semi-static HARQ disabling. The preamble sequence in the random access message sent by the terminal to the network device can implicitly indicate the capability information of the terminal corresponding to the preamble sequence.

In an embodiment of the present disclosure, after the terminal sends the capability information to the network device, the network device can send second information to the terminal based on the capability information. The second information can configure the enabling of the HARQ process of the terminal (for example, enabled or disabled).

In step 302, an RRC signaling sent by the network device is received, wherein the RRC signaling is configured to determine an enabling configuration of a HARQ process of the terminal.

In embodiments of the present disclosure, the terminal can receive the second information sent by the network device and determine the enabling configuration status of the HARQ process based on the second information. The second information is the RRC signaling.

In an embodiment of the present disclosure, the network device can send the second information to the terminal based on the capability information reported by the terminal. The terminal receives the second information and determines the enabling configuration status of the HARQ process based on the second information (such as enabled or disabled). That is, the network device can switch the HARQ enabling of the terminal through the RRC signaling.

It can be understood that in the embodiments of the present disclosure, the terminal can determine the enabling configuration status of the HARQ process through the high-layer signaling (such as RRC signaling). The terminal does not expect to receive the physical layer signaling (such as DCI) indicating the HARQ enabling configuration status, or does not expect to receive scheduling instructions containing an information field indicating the HARQ enabling configuration status. Alternatively, the received physical layer signaling or scheduling instructions may contain an information field indicating the HARQ enabling configuration status, but the terminal does not parse this information field.

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure that the terminal does not use the HARQ disabling through the third information, based on the capability information reported by the terminal.

In summary, by sending the first information to the network device, which is used for the network device to determine the capability information of the terminal, which is used to indicate that the terminal supports the semi-static HARQ disabling, and receiving the RRC signaling sent by the network device, which is used to determine the enabling configuration of the HARQ process of the terminal, the network device can flexibly configure the HARQ process enabling of the terminal based on the capability information reported by the terminal, thereby ensuring the efficiency of the entire communication system and the reliability of data transmission.

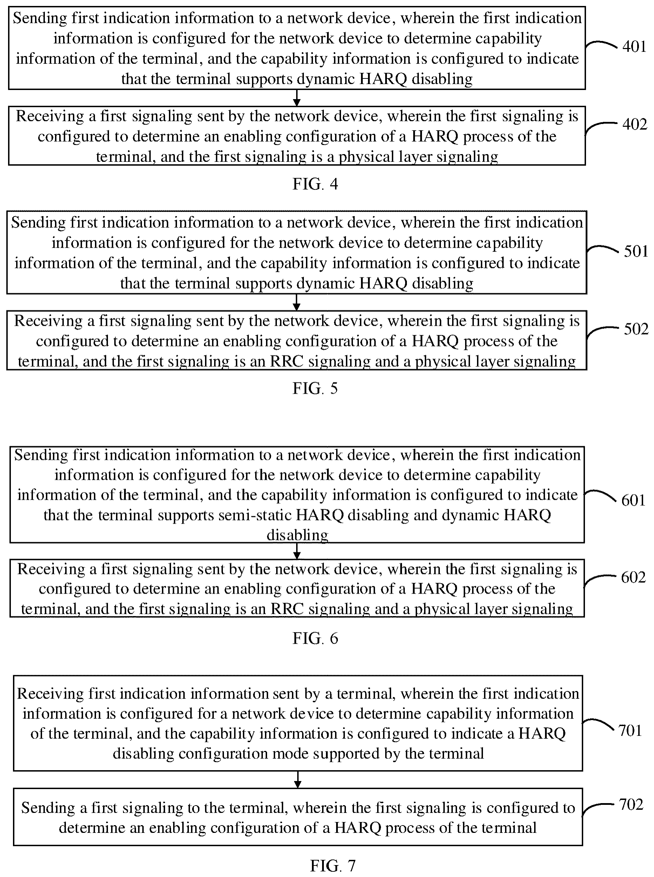

Please refer to FIG. 4, which is a schematic flowchart of a method for configuring HARQ process enabling provided in an embodiment of the present disclosure. It should be noted that the method for configuring HARQ process enabling of the present embodiment is performed by a terminal. This method can be executed independently or in combination with any other embodiment of the present disclosure. As shown in FIG. 4, the method may include the following steps.

In step 401, first information is sent to a network device, wherein the first information is configured for the network device to determine capability information of the terminal, and the capability information is configured to indicate that the terminal supports dynamic HARQ disabling.

In an embodiment of the present disclosure, the terminal can send the first information to the network device. The first information is configured to indicate the capability information of the HARQ disabling configuration mode supported by the terminal, and the capability information of the terminal is supporting dynamic HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a MAC layer signaling; or an RRC signaling.

The random access message may be a random access message in the four-step random access, such as Msg1 (Message 1), or a random access message in the two-step random access, such as MsgA (Message A), etc. The physical layer signaling may be UCI or other physical layer scheduling signaling.

The first information may be bit information, which is included in the indication field of at least one of the above-mentioned information and can explicitly indicate the capability information of the terminal.

As an example, the first information may be 2-bit information, and for example, the value "00" of the first information can indicate that the capability information of the terminal is supporting dynamic HARQ disabling, etc. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 is used to indicate that the capability information of the terminal is supporting dynamic HARQ disabling. The preamble sequence in the random access message sent by the terminal to the network device can implicitly indicate the capability information of the terminal corresponding to the preamble sequence.

In an embodiment of the present disclosure, after the terminal sends the capability information to the network device, the network device can send second information to the terminal based on the capability information. The second information can configure the enabling of the HARQ process of the terminal (for example, enabled or disabled).

In step 402, second information sent by the network device is received, wherein the second information is configured to determine an enabling configuration of a HARQ process of the terminal, and the second information is carried in a physical layer signaling.

In embodiments of the present disclosure, the terminal can receive the second information sent by the network device and determine the enabling configuration status of the HARQ process based on the second information. The second information is the physical layer signaling.

In an embodiment of the present disclosure, the network device can send the second information to the terminal based on the capability information reported by the terminal. The terminal receives the second information and determines the enabling configuration status of the HARQ process based on the second information (such as enabled or disabled). That is, the network device can switch the HARQ enabling of the terminal through the physical layer signaling (such as DCI).

It can be understood that in the embodiments of the present disclosure, the terminal can determine the enabling configuration status of the HARQ process through the physical layer signaling (such as DCI).

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure the HARQ disabling configuration mode used by the terminal to be dynamic HARQ disabling through the third information, based on the capability information reported by the terminal. The network device can switch the HARQ enabling configuration status of the terminal through the physical layer signaling, or switch the HARQ enabling configuration status of the terminal through the RRC signaling and the physical layer signaling.

As yet another possible implementation, the network device can configure the HARQ disabling configuration mode used by the terminal to be semi-static HARQ disabling and dynamic HARQ disabling through the third information, based on the capability information reported by the terminal. The network device can switch the HARQ enabling configuration status of the terminal through the RRC signaling and the physical layer signaling.

As still yet another possible implementation, the network device can configure that the terminal does not use the HARQ disabling through the third information, based on the capability information reported by the terminal.

In summary, by sending the first information to the network device, which is used for the network device to determine the capability information of the terminal, which is used to indicate that the terminal supports the semi-static HARQ disabling, and receiving the second information sent by the network device, which is used to determine the enabling configuration of the HARQ process of the terminal and is the physical layer signaling, the network device can flexibly configure the HARQ process enabling of the terminal based on the capability information reported by the terminal, thereby ensuring the efficiency of the entire communication system and the reliability of data transmission.

Please refer to FIG. 5, which is a schematic flowchart of a method for configuring HARQ process enabling provided in an embodiment of the present disclosure. It should be noted that the method for configuring HARQ process enabling of the present embodiment is performed by a terminal. This method can be executed independently or in combination with any other embodiment of the present disclosure. As shown in FIG. 5, the method may include the following steps.

In step 501, first information is sent to a network device, wherein the first information is configured for the network device to determine capability information of the terminal, and the capability information is configured to indicate that the terminal supports dynamic HARQ disabling.

In an embodiment of the present disclosure, the terminal can send the first information to the network device. The first information is configured to indicate the capability information of the HARQ disabling configuration mode supported by the terminal, and the capability information of the terminal is supporting dynamic HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a MAC layer signaling; or an RRC signaling.

The random access message may be a random access message in the four-step random access, such as Msgl (Message 1), or a random access message in the two-step random access, such as MsgA (Message A), etc. The physical layer signaling may be UCI or other physical layer scheduling signaling.

The first information may be bit information, which is included in the indication field of at least one of the above-mentioned information and can explicitly indicate the capability information of the terminal.

As an example, the first information may be 2-bit information, and for example, the value "00" of the first information can indicate that the capability information of the terminal is supporting dynamic HARQ disabling, etc. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 is used to indicate that the capability information of the terminal is supporting dynamic HARQ disabling. The preamble sequence in the random access message sent by the terminal to the network device can implicitly indicate the capability information of the terminal corresponding to the preamble sequence.

In an embodiment of the present disclosure, after the terminal sends the capability information to the network device, the network device can send second information to the terminal based on the capability information. The second information can configure the enabling of the HARQ process of the terminal (for example, enabled or disabled).

In step 502, second information sent by the network device is received, wherein the second information is configured to determine an enabling configuration of a HARQ process of the terminal, and the second information is carried in a RRC signaling and a physical layer signaling.

In embodiments of the present disclosure, the terminal can receive the second information sent by the network device and determine the enabling configuration status of the HARQ process based on the second information. The second information is the RRC signaling and the physical layer signaling.

In an embodiment of the present disclosure, the network device can send the second information to the terminal based on the capability information reported by the terminal. The terminal receives the second information and determines the enabling configuration status of the HARQ process based on the second information (such as enabled or disabled). That is, the network device can switch the HARQ enabling of the terminal through the RRC signaling and the physical layer signaling (such as DCI).

It can be understood that in an embodiment of the present disclosure, the terminal supports the dynamic HARQ disabling, and in some implementations, it can also be considered that the terminal can support semi-static HARQ disabling. The terminal can determine the enabling configuration status of the HARQ process through the RRC signaling and the physical layer signaling.

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure the HARQ disabling configuration mode used by the terminal to be dynamic HARQ disabling through the third information, based on the capability information reported by the terminal. The network device can switch the HARQ enabling configuration status of the terminal through the physical layer signaling, or switch the HARQ enabling configuration status of the terminal through the RRC signaling and the physical layer signaling.

As yet another possible implementation, the network device can configure the HARQ disabling configuration mode used by the terminal to be semi-static HARQ disabling and dynamic HARQ disabling through the third information, based on the capability information reported by the terminal. The network device can switch the HARQ enabling configuration status of the terminal through the RRC signaling and the physical layer signaling.

As still yet another possible implementation, the network device can configure that the terminal does not use the HARQ disabling through the third information, based on the capability information reported by the terminal.

In summary, by sending the first information to the network device, which is used for the network device to determine the capability information of the terminal, which is used to indicate that the terminal supports the semi-static HARQ disabling, and receiving the second information sent by the network device, which is used to determine the enabling configuration of the HARQ process of the terminal and is the RRC signaling and the physical layer signaling, the network device can flexibly configure the HARQ process enabling of the terminal based on the capability information reported by the terminal, thereby ensuring the efficiency of the entire communication system and the reliability of data transmission.

Please refer to FIG. 6. which is a schematic flowchart of a method for configuring HARQ process enabling provided in an embodiment of the present disclosure. It should be noted that the method for configuring HARQ process enabling of the present embodiment is performed by a terminal. This method can be executed independently or in combination with any other embodiment of the present disclosure. As shown in FIG. 6, the method may include the following steps.

In step 601, first information is sent to a network device, wherein the first information is configured for the network device to determine capability information of the terminal, and the capability information is configured to indicate that the terminal supports semi-static HARQ disabling and dynamic HARQ disabling.

In an embodiment of the present disclosure, the terminal can send the first information to the network device. The first information is configured to indicate the capability information of the HARQ disabling configuration mode supported by the terminal, and the capability information of the terminal is supporting semi-static HARQ disabling and dynamic HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a MAC layer signaling; or an RRC signaling.

The random access message may be a random access message in the four-step random access, such as Msg1 (Message 1), or a random access message in the two-step random access, such as MsgA (Message A), etc. The physical layer signaling may be UCI or other physical layer scheduling signaling.

The first information may be bit information, which is included in the indication field of at least one of the above-mentioned information and can explicitly indicate the capability information of the terminal.

As an example, the first information may be 2-bit information, and for example, the value "00" of the first information can indicate that the capability information of the terminal is supporting semi-static HARQ disabling and dynamic HARQ disabling, etc. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 is used to indicate that the capability information of the terminal is supporting semi-static HARQ disabling and dynamic HARQ disabling. The preamble sequence in the random access message sent by the terminal to the network device can implicitly indicate the capability information of the terminal corresponding to the preamble sequence.

In an embodiment of the present disclosure, after the terminal sends the capability information to the network device, the network device can send second information to the terminal based on the capability information. The second information can configure the enabling of the HARQ process of the terminal (for example, enabled or disabled).

In step 602, second information sent by the network device is received, wherein the second information is configured to determine an enabling configuration of a HARQ process of the terminal, and the second information is carried in a RRC signaling and a physical layer signaling.

In embodiments of the present disclosure, the terminal can receive the second information sent by the network device and determine the enabling configuration status of the HARQ process based on the second information. The second information is the RRC signaling and the physical layer signaling.

In an embodiment of the present disclosure, the network device can send the second information to the terminal based on the capability information reported by the terminal. The terminal receives the second information and determines the enabling configuration status of the HARQ process based on the second information (such as enabled or disabled). That is, the network device can switch the HARQ enabling of the terminal through the RRC signaling and the physical layer signaling (such as DCI).

It can be understood that in an embodiment of the present disclosure, the terminal supports the semi-static HARQ disabling and dynamic HARQ disabling, and the terminal can determine the enabling configuration status of the HARQ process through the RRC signaling and the physical layer signaling.

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure the HARQ disabling configuration mode used by the terminal to be dynamic HARQ disabling through the third information, based on the capability information reported by the terminal. The network device can switch the HARQ enabling configuration status of the terminal through the physical layer signaling, or switch the HARQ enabling configuration status of the terminal through the RRC signaling and the physical layer signaling.

As yet another possible implementation, the network device can configure the HARQ disabling configuration mode used by the terminal to be semi-static HARQ disabling and dynamic HARQ disabling through the third information, based on the capability information reported by the terminal. The network device can switch the HARQ enabling configuration status of the terminal through the RRC signaling and the physical layer signaling.

As still yet another possible implementation, the network device can configure that the terminal does not use the HARQ disabling through the third information, based on the capability information reported by the terminal.

In summary, by sending the first information to the network device, which is used for the network device to determine the capability information of the terminal, which is used to indicate that the terminal supports the semi-static HARQ disabling and the dynamic HARQ disabling, and receiving the second information sent by the network device, which is used to determine the enabling configuration of the HARQ process of the terminal and is the RRC signaling and the physical layer signaling, the network device can flexibly configure the HARQ process enabling of the terminal based on the capability information reported by the terminal, thereby ensuring the efficiency of the entire communication system and the reliability of data transmission.

Please refer to FIG. 7, which is a schematic flowchart of a method for configuring HARQ process enabling provided in an embodiment of the present disclosure. It should be noted that the method for configuring HARQ process enabling of the present embodiment is performed by a network device. This method can be executed independently or in combination with any other embodiment of the present disclosure. As shown in FIG. 7, the method may include the following steps.

In step 701, first information is sent to a network device, wherein the first information is configured for the network device to determine capability information of the terminal, and the capability information is configured to indicate a HARQ disabling configuration mode supported by the terminal.

In an embodiment of the present disclosure, the network device can receive the first information sent by the terminal. The first information is configured to indicate the capability information of the HARQ disabling configuration mode supported by the terminal.

In an embodiment of the present disclosure, the capability information of the terminal is any of:
supporting semi-static HARQ disabling;
supporting dynamic HARQ disabling;
supporting semi-static HARQ disabling and dynamic HARQ disabling; or
not supporting HARQ disabling.

It can be understood that in various embodiments of the present disclosure, the first information may directly indicate the capability information of the terminal, and the first information may also be used to indicate other information that can determine the capability information of the terminal.

In some implementations, the first information explicitly indicates the capability information of the terminal.

Optionally, the first information explicitly indicating the capability information of the terminal may be contained in at least one of:
a random access message; a physical layer signaling; a medium access control (MAC) layer signaling; or an RRC signaling.

The random access message may be a random access message in the four-step random access, such as Message 1, or a random access message in the two-step random access, such as Message A, etc. The physical layer signaling may be UCI or other physical layer scheduling signaling.

The first information may be bit information, which is included in the indication field of at least one of the above-mentioned information and can explicitly indicate the capability information of the terminal.

As an example, the first information may be 2-bit information, where "00" can be used to indicate one kind of capability information (such as indicating that the capability information of the terminal is supporting semi-static HARQ disabling, etc.), and "01", "10", "11" can be used to indicate other kinds of capability information of the terminal. It can be understood that the bit length of the first information may also be other values, etc., and the correspondence between the value of the first information and the capability information of the terminal can also have various ways, which is not limited in embodiments of the present disclosure.

In some implementations, the terminal can receive indication information sent by the network device, which is used to indicate the terminal to send the first information to the network device. That is to say, the first information sent by the terminal to the network device can be sent autonomously or after receiving the triggering instruction from the network device.

In some implementations, the first information implicitly indicates the capability information of the terminal.

Optionally, the first information that implicitly indicates the capability information of the terminal may be a preamble sequence in the random access message, resource location information of a designated signal sent by the terminal to the network device, or resource location information of a designated signaling sent by the terminal to the network device, or other information, etc.

As an example, the correspondence between multiple preamble sequences and the capability information of the terminal can be predefined. For example, preamble sequence 1 corresponds to one kind of capability information (for example, the corresponding capability information of the terminal is supporting semi-static HARQ disabling), preamble sequence 2 corresponds to another kind of capability information (for example, the corresponding capability information of the terminal is supporting dynamic HARQ disabling), preamble sequence 3 corresponds to yet another kind of capability information (for example, the corresponding capability information of the terminal is supporting semi-static HARQ disabling and dynamic HARQ disabling), and preamble sequence 4 corresponds to still yet another kind of capability information (for example, the corresponding capability information of the terminal is not supporting HARQ disabling). The preamble sequence in the random access message sent by the terminal to the network device can implicitly indicate the capability information of the terminal corresponding to the preamble sequence.

As another example, the capability information of the terminal can be implicitly indicated by the resource location information of the designated signal sent by the terminal to the network device. For example, the designated signal may be a reference signal sent by the terminal, or a preamble sequence, etc., which is not limited in the embodiments of the present disclosure and can be selected arbitrarily according to the actual situation. It is possible to predefine the correspondence between the resource location information for sending the designated signal and the capability information of the terminal, and implicitly indicate the corresponding capability information through the resource location information.

Similarly, the capability information of the terminal can also be implicitly indicated by the resource location information of the designated control signaling sent by the terminal to the network device. For example, the designated signaling can be uplink control information (UCI), etc., which is not limited in the embodiments of this disclosure and can be selected arbitrarily according to the actual situation. It is possible to predefine the correspondence between the resource location information for sending the designated signaling and the capability information of the terminal, and implicitly indicate the corresponding capability information through the resource location information.

It can be understood that in the embodiments of the present disclosure, the resource location information can be a time-domain location, a frequency-domain location, a time-frequency domain location, and so on, which is not limited in various embodiments of the present disclosure.

In an embodiment of the present disclosure, after the terminal sends the capability information to the network device, the network device can send second information to the terminal based on the capability information. The second information can configure the enabling of the HARQ process of the terminal (for example, enabled or disabled).

In step 702, second information is sent to the terminal, wherein the second information is configured to determine an enabling configuration of a HARQ process of the terminal.

In embodiments of the present disclosure, the network device can send the second information to the terminal and the terminal can determine the enabling configuration status of the HARQ process based on the second information.

In some implementations, the network device can send the second information to the terminal based on the capability information reported by the terminal. The terminal receives the second information and determines the enabling configuration status of the HARQ process based on the second information (such as enabled or disabled).

As a possible implementation, the terminal supports the semi-static HARQ disabling, and the second information may be carried in the RRC signaling.

As another possible implementation, the terminal supports the dynamic HARQ disabling, and the second information may be carried in the physical layer signaling (such as DCI), or in the RRC signaling and the physical layer signaling.

As yet another possible implementation, the terminal supports the semi-static HARQ disabling and the dynamic HARQ disabling, and the second information may be carried in the RRC signaling and the physical layer signaling.

As still yet another possible implementation, the terminal does not support the HARQ disabling, and the second information can be used to determine the enabling configuration of the HARQ process of the terminal as enabled (that is, the terminal will not be configured with HARQ disabled).

In some implementations, the network device can send third information to the terminal before sending the second information, based on the capability information reported by the terminal. The third information is used to indicate the HARQ disabling configuration mode used by the terminal.

As a possible implementation, the network device can configure the HARQ disabling configuration mode used by the terminal to be semi-static HARQ disabling through the third information, based on the capability information reported by the terminal. The network device can switch the HARQ enabling configuration status of the terminal through the RRC signaling.

As another possible implementation, the network device can configure the HARQ disabling configuration mode used by the terminal to be dynamic HARQ disabling through the third information, based on the capability information reported by the terminal. The network device can switch the HARQ enabling configuration of the terminal through the physical layer signaling, or switch the HARQ enabling configuration status of the terminal through the RRC signaling and the physical layer signaling.

As yet another possible implementation, the network device can configure the HARQ disabling configuration mode used by the terminal to be semi-static HARQ disabling and dynamic HARQ disabling through the third information, based on the capability information reported by the terminal. The network device can switch the HARQ enabling configuration status of the terminal through the RRC signaling and the physical layer signaling.

As still yet another possible implementation, the network device can configure that the terminal does not use the HARQ disabling through the third information, based on the capability information reported by the terminal.

In summary, by receiving the first information sent by the terminal, which is used for the network device to determine the capability information of the terminal, which is used to indicate the hybrid automatic repeat request (HARQ) disabling configuration mode supported by the terminal, and sending the second information to the terminal, which is used to determine the enabling configuration of the HARQ process of the terminal, the network device can flexibly configure the HARQ process enabling of the terminal based on the capability information reported by the terminal, thereby ensuring the efficiency of the entire communication system and the reliability of data transmission.

Corresponding to the method for configuring HARQ process enabling provided in the above embodiments, the present disclosure also provides an apparatus for configuring HARQ process enabling. Since the apparatus for configuring HARQ process enabling provided in embodiments of the present disclosure corresponds to the methods provided in the above embodiments, the implementation of the method for configuring HARQ process enabling is also applicable to the apparatus for configuring HARQ process enabling provided in the following embodiments, which will not be described in detail in the following embodiments.

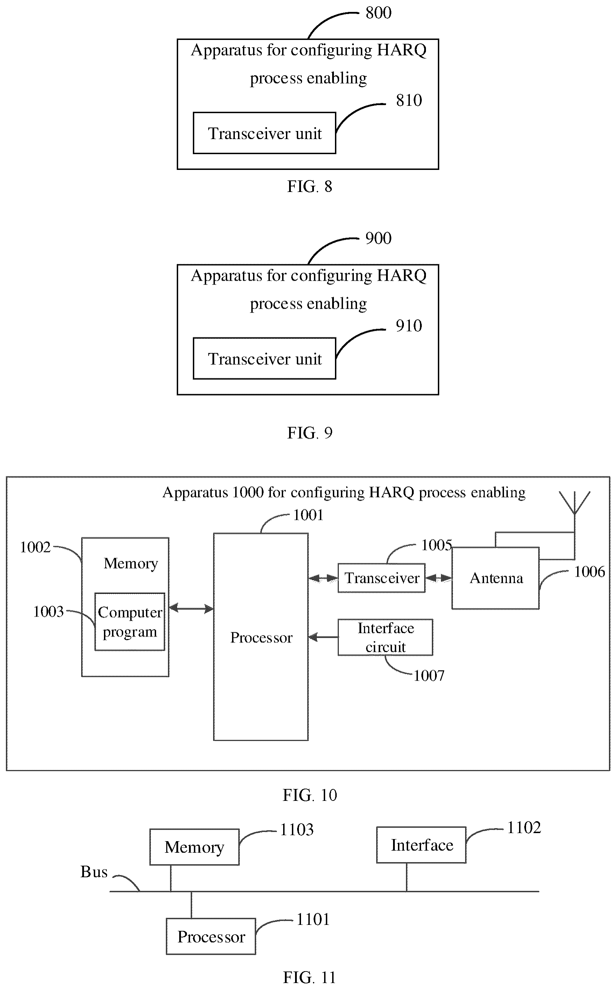

Please refer to FIG. 8, which is a block diagram of an apparatus for configuring HARQ process enabling provided in an embodiment of the present disclosure.

As shown in FIG. 8, the apparatus 800 for configuring HARQ process enabling includes a transceiver unit 810.

The transceiver unit 810 is configured to send first information to a network device, wherein the first information is configured for the network device to determine capability information of the terminal, and the capability information is configured to indicate a HARQ disabling configuration mode supported by the terminal.

The transceiver unit 810 is further configured to receive second information sent by the network device, wherein the second information is configured to determine an enabling configuration of a HARQ process of the terminal.

Optionally, the capability information of the terminal is any of:
supporting semi-static HARQ disabling;
supporting dynamic HARQ disabling;
supporting semi-static HARQ disabling and dynamic HARQ disabling; or
not supporting HARQ disabling.

Optionally, the transceiver unit 810 is further configured to:
receive third information sent by the network device, wherein the third information is configured to indicate a HARQ disabling configuration mode used by the terminal.

Optionally, the terminal supports the semi-static HARQ disabling, and the second information is carried in a radio resource control (RRC) signaling.

Optionally, the terminal supports the dynamic HARQ disabling, and the second information is carried in a physical layer signaling, or in a RRC signaling and a physical layer signaling.

Optionally, the terminal supports the semi-static HARQ disabling and the dynamic HARQ disabling, and the second information is carried in a RRC signaling and a physical layer signaling.

Optionally, the terminal does not support the HARQ disabling, and the second information is configured to determine the enabling configuration of the HARQ process as enabled.

Optionally, the first information explicitly indicates the capability information of the terminal, and the first information is included in at least one of:
a random access message;
a physical layer signaling;
a media access control (MAC) layer signaling; or
a radio resource control (RRC) signaling.

Optionally, the transceiver unit 810 is further configured to :
receive indication information sent by the network device, wherein the indication information is used to indicate the terminal to send the first information to the network device.

Optionally, the first information implicitly indicates the capability information of the terminal, and the first information is at least one of:
a preamble sequence in a random access message;
resource location information of a designated signal sent by the terminal to the network device; or
resource location information of a designated signaling sent by the terminal to the network device.

The apparatus for configuring HARQ process enabling of this embodiment can send first information to the network device, which is used for the network device to determine the capability information of the terminal, which is used to indicate the HARQ disabling configuration mode supported by the terminal, and receive the second information sent by the network device, which is used to determine the enabling configuration of the HARQ process of the terminal, so that the network device can flexibly configure the HARQ process enabling of the terminal based on the capability information reported by the terminal, thereby ensuring the efficiency of the entire communication system and the reliability of data transmission.

Please refer to FIG. 9, which is a block diagram of an apparatus for configuring HARQ process enabling provided in an embodiment of the present disclosure.

As shown in FIG. 9, the apparatus 900 for configuring HARQ process enabling includes a transceiver unit 910.

The transceiver unit 910 is configured to receive first information sent by a terminal, wherein the first information is configured for the network device to determine capability information of the terminal, and the capability information is configured to indicate a HARQ disabling configuration mode supported by the terminal.

The transceiver unit 910 is further configured to send second information to the terminal, wherein the second information is configured to determine an enabling configuration of a HARQ process of the terminal.

Optionally, the capability information of the terminal is any of:
supporting semi-static HARQ disabling;
supporting dynamic HARQ disabling;
supporting semi-static HARQ disabling and dynamic HARQ disabling; or
not supporting HARQ disabling.

Optionally, the transceiver unit 910 is further configured to:
send third information to the terminal, wherein the third information is configured to indicate a HARQ disabling configuration mode used by the terminal.

Optionally, the terminal supports the semi-static HARQ disabling, and the second information is carried in a radio resource control (RRC) signaling.

Optionally, the terminal supports the dynamic HARQ disabling, and the second information is carried in a physical layer signaling, or in a RRC signaling and a physical layer signaling.

Optionally, the terminal supports the semi-static HARQ disabling and the dynamic HARQ disabling, and the second information is carried in a RRC signaling and a physical layer signaling.

Optionally, the terminal does not support the HARQ disabling, and the second information is configured to determine the enabling configuration of the HARQ process as enabled.

Optionally, the first information explicitly indicates the capability information of the terminal, and the first information is included in at least one of:
a random access message;
a physical layer signaling;
a media access control (MAC) layer signaling; or
a radio resource control (RRC) signaling.

Optionally, the transceiver unit 910 is further configured to:
send indication information to the terminal, wherein the indication information is used to indicate the terminal to send the first information to the network device.

Optionally, the first information implicitly indicates the capability information of the terminal, and the first information is at least one of:
a preamble sequence in a random access message;
resource location information of a designated signal sent by the terminal to the network device; or
resource location information of a designated signaling sent by the terminal to the network device.

The apparatus for configuring HARQ process enabling of this embodiment can receive the first information sent by the terminal, which is used by the network device to determine the capability information of the terminal, which is used to indicate the HARQ disabling configuration mode supported by the terminal, and send the second information to the terminal, which is used to determine the enabling configuration of the HARQ process of the terminal, so that the network device can flexibly configure the HARQ process enabling of the terminal based on the capability information reported by the terminal, thereby ensuring the efficiency of the entire communication system and the reliability of data transmission.

In order to implement the above embodiments, the present disclosure further proposes a communication device, including a processor and a memory. The memory stores a computer program, and the processor is configured to execute the computer program stored in the memory to enable the device to perform the methods shown in the embodiments of Figures 2 to 6.

In order to implement the above embodiments, the present disclosure further proposes a communication device, including a processor and a memory. The memory stores a computer program, and the processor is configured to execute the computer program stored in the memory to enable the device to perform the method shown in the embodiment of FIG. 7.

In order to implement the above embodiments, the present disclosure further proposes a communication device, including a processor and an interface circuit. The interface circuit is configured to receive code instructions and transmit the code instructions to the processor. The processor is configured to run the code instructions to perform the methods shown in the embodiments of Figures 2 to 6.

In order to implement the above embodiments, the present disclosure further proposes a communication device, including a processor and an interface circuit. The interface circuit is configured to receive code instructions and transmit the code instructions to the processor, and the processor is configured to run the code instructions to execute the method shown in the embodiment of FIG. 7.

Please refer to FIG. 10, which is a block diagram of another apparatus for configuring HARQ process enabling provided in an embodiment of the present disclosure. The apparatus 1000 for configuring HARQ process enabling may be a network device or a terminal, or may be a chip, a chip system, or a processor that supports the network device to implement the above method, or may be a chip, a chip system, or a processor that supports the terminal to implement the above method. The apparatus may be used to implement the method in the above method embodiments, and specific details may be found in explanations of the above method embodiments.

The apparatus 1000 for configuring HARQ process enabling may include one or more processors 1001. The processor 1001 may be a general-purpose processor or a special-purpose processor. For example, it may be a baseband processor or a central processing unit. The baseband processor is configured to process communication protocols and communication data, and the central processor is configured to control the apparatus for configuring HARQ process enabling (such as base stations, baseband chips, terminals, terminal chips, DU or CU, etc.) to execute computer programs and process computer program data.

Optionally, the apparatus 1000 for configuring HARQ process enabling may also include one or more memories 1002 on which a computer program 1003 is stored. When the computer program 1003 is executed by the processor 1001, the apparatus 1000 for configuring HARQ process enabling is enabled to implement the method in the above method embodiments. The computer program 1003 may be solidified in the processor 1001. In this way, the processor 1001 may be implemented in hardware.

Optionally, the memory 1002 may also store data. The apparatus 1000 for configuring HARQ process enabling and the memory 1002 can be set separately or integrated together.

Optionally, the apparatus 1000 for configuring HARQ process enabling may also include a transceiver 1005 and an antenna 1006. The transceiver 1005 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the apparatus 1000 for configuring HARQ process enabling may also include one or more interface circuits 1007. The interface circuit 1007 is configured to receive code instructions and transmit the code instructions to the processor 1001. When the code instructions are running on the processor 1001, the apparatus 1000 for configuring HARQ process enabling is caused to implement the method in the above method embodiments.

In an implementation, the processor 1001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the apparatus 1000 for configuring HARQ process enabling may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The apparatus for configuring HARQ process enabling in the above embodiments may be a network device or a terminal, but the scope of the apparatus for configuring HARQ process enabling in the present disclosure is not limited to this, and the structure of the apparatus for configuring HARQ process enabling may not be restricted by FIG. 8 and FIG. 9. The apparatus for configuring HARQ process enabling may be an independent device or part of a larger device. For example, the apparatus for configuring HARQ process enabling may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For a case where the apparatus for configuring HARQ process enabling may be a chip or a chip system, please refer to FIG. 11, which is a block diagram of a chip. The chip shown in FIG. 11 includes a processor 1101 and an interface 1102. Optionally, there may be one or more processors 1101, and there may be one or more interfaces 1102.

For the case where the chip is configured to implement the functions of the terminal in the embodiments of the present disclosure:
the interface 1102 is configured to receive code instructions and transmit the code instructions to the processor;
the processor 1101 is configured to run the code instructions to execute the methods shown in Figures 2 to 8.

For the case where the chip is configured to implement the functions of the network device in the embodiments of the present disclosure:
the interface 1102 is configured to receive code instructions and transmit the code instructions to the processor;
the processor 1101 is configured to run the code instructions to execute the methods shown in FIG. 9.

Optionally, the chip further includes a memory 1103 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

Embodiments of the present disclosure further provide a communication system. The system includes the apparatus for configuring HARQ process enabling as the terminal and the apparatus for configuring HARQ process enabling as the network device in the embodiments of Figures 8-9 described above. Alternatively, the system includes the apparatus for configuring HARQ process enabling as the terminal and the apparatus for configuring HARQ process enabling as the network device in the embodiment of FIG. 10 described above.

The present disclosure further provides a readable storage medium stored with instructions. When the instructions are executed by a computer, functions of any one of the above method embodiments are performed.

The present disclosure further provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of the embodiments of the present disclosure, but also to indicate an order of precedence.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with the examples described in embodiments of the present disclosure, units and algorithm steps may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that for a specific working process of a system, an apparatus and a unit described above reference may be made to a corresponding process in the above method embodiments, and details will not be repeated here.

It should be understood that various forms of processes shown above can be used to reorder, add, or delete steps. For example, the steps described in the embodiments of the present disclosure can be executed in parallel, sequentially, or in different orders, as long as they can achieve the desired results of the disclosed technical solution, which is not limited herein.

The above specific embodiments do not constitute limitations on the scope of protection of the present disclosure. Technicians in this field should understand that various modifications, combinations, sub combinations, and substitutions can be made based on design requirements and other factors. Any modifications, equivalent substitutions, and changes made within the spirit and principles of the present disclosure shall be included within the scope of protection of the present disclosure.

## Claims

1. A method for configuring hybrid automatic repeat request (HARQ) process enabling, performed by a terminal, comprising:
sending first information to a network device, wherein the first information is configured for the network device to determine capability information of the terminal, and the capability information is configured to indicate a HARQ disabling configuration mode supported by the terminal; and
receiving second information sent by the network device, wherein the second information is configured to determine an enabling configuration of a HARQ process of the terminal.

2. The method of claim 1, wherein the capability information of the terminal is any of:
supporting semi-static HARQ disabling;
supporting dynamic HARQ disabling;
supporting semi-static HARQ disabling and dynamic HARQ disabling; or
not supporting HARQ disabling.

3. The method of claim 2, further comprising:
receiving third information sent by the network device, wherein the third information is configured to indicate a HARQ disabling configuration mode used by the terminal.

4. The method of claim 2 or 3, wherein the terminal supports the semi-static HARQ disabling, and the second information is carried in a radio resource control (RRC) signaling.

5. The method of claim 2 or 3, wherein the terminal supports the dynamic HARQ disabling, and the second information is carried in a physical layer signaling, or in a RRC signaling and a physical layer signaling.

6. The method of claim 2 or 3, wherein the terminal supports the semi-static HARQ disabling and the dynamic HARQ disabling, and the second information is carried in a RRC signaling and a physical layer signaling.

7. The method of claim 2 or 3, wherein the terminal does not support the HARQ disabling, and the second information is configured to determine the enabling configuration of the HARQ process as enabled.

8. The method of any of claims 1-7, wherein the first information explicitly indicates the capability information of the terminal, and the first information is comprised in at least one of:
a random access message;
a physical layer signaling;
a media access control (MAC) layer signaling; or
a radio resource control (RRC) signaling.

9. The method of claim 8, further comprising:
receiving indication information sent by the network device, wherein the indication information is used to indicate the terminal to send the first information to the network device.

10. The method of any of claims 1-3, wherein the first information implicitly indicates the capability information of the terminal, and the first information is at least one of:
a preamble sequence in a random access message;
resource location information of a designated signal sent by the terminal to the network device; or
resource location information of a designated signaling sent by the terminal to the network device.

11. A method for configuring hybrid automatic repeat request (HARQ) process enabling, performed by a network device, comprising:
receiving first information sent by a terminal, wherein the first information is configured for the network device to determine capability information of the terminal, and the capability information is configured to indicate a HARQ disabling configuration mode supported by the terminal; and
sending second information to the terminal, wherein the second information is configured to determine an enabling configuration of a HARQ process of the terminal.

12. The method of claim 11, wherein the capability information of the terminal is any of:
supporting semi-static HARQ disabling;
supporting dynamic HARQ disabling;
supporting semi-static HARQ disabling and dynamic HARQ disabling; or
not supporting HARQ disabling.

13. The method of claim 12, further comprising:
sending third information to the terminal, wherein the third information is configured to indicate a HARQ disabling configuration mode used by the terminal.

14. The method of claim 12 or 13, wherein the terminal supports the semi-static HARQ disabling, and the second information is carried in a radio resource control (RRC) signaling.

15. The method of claim 12 or 13, wherein the terminal supports the dynamic HARQ disabling, and the second information is carried in a physical layer signaling, or in a RRC signaling and a physical layer signaling.

16. The method of claim 12 or 13, wherein the terminal supports the semi-static HARQ disabling and the dynamic HARQ disabling, and the second information is carried in a RRC signaling and a physical layer signaling.

17. The method of claim 12 or 13, wherein the terminal does not support the HARQ disabling, and the second information is configured to determine the enabling configuration of the HARQ process as enabled.

18. The method of any of claims 11-17, wherein the first information explicitly indicates the capability information of the terminal, and the first information is comprised in at least one of:
a random access message;
a physical layer signaling;
a media access control (MAC) layer signaling; or
a radio resource control (RRC) signaling.

19. The method of claim 18, further comprising:
sending indication information to the terminal, wherein the indication information is used to indicate the terminal to send the first information to the network device.

20. The method of any of claims 11-13, wherein the first information implicitly indicates the capability information of the terminal, and the first information is at least one of:
a preamble sequence in a random access message;
resource location information of a designated signal sent by the terminal to the network device; or
resource location information of a designated signaling sent by the terminal to the network device.

21. An apparatus for configuring hybrid automatic repeat request process enabling, comprising:
a transceiver unit, configured to send first information to a network device, wherein the first information is configured for the network device to determine capability information of the terminal, and the capability information is configured to indicate a HARQ disabling configuration mode supported by the terminal;
wherein the transceiver unit is further configured to receive second information sent by the network device, wherein the second information is configured to determine an enabling configuration of a HARQ process of the terminal.

22. An apparatus for configuring hybrid automatic repeat request process enabling, comprising:
a transceiver unit, configured to receive first information sent by a terminal, wherein the first information is configured for the network device to determine capability information of the terminal, and the capability information is configured to indicate a HARQ disabling configuration mode supported by the terminal;
wherein the transceiver unit is further configured to send second information to the terminal, wherein the second information is configured to determine an enabling configuration of a HARQ process of the terminal.

23. A communication device, comprising a processor and a memory for storing computer programs, wherein the processor is configured to execute the computer programs stored in the memory, to cause the device to implement the method of any one of claims 1-10.

24. A communication device, comprising a processor and a memory for storing computer programs, wherein the processor is configured to execute the computer programs stored in the memory, to cause the device to implement the method of any one of claims 11-20.

25. A communication device, comprising a processor and an interface circuit; wherein
the interface circuit is configured to receive code instructions and transmit the code instructions to the processor; and
the processor is configured to run the code instructions to implement the method of any one of claims 1-10.

26. A communication device, comprising a processor and an interface circuit; wherein
the interface circuit is configured to receive code instructions and transmit the code instructions to the processor; and
the processor is configured to run the code instructions to implement the method of any one of claims 11-20.

27. A computer-readable storage medium for storing instructions, wherein when the instructions are executed, the method of any one of claims 1-10 is implemented.

28. A computer-readable storage medium for storing instructions, wherein when the instructions are executed, the method of any one of claims 11-20 is implemented.

29. A communication system, comprising:
a terminal, configured to implement the method of any of claims 1-10; and
a network device, configured to implement the method of any of claims 11-20.
